# EUROPEAN PATENT SPECIFICATION

(11) **EP 0 604 699 B1**
(45) Date of publication and mention of the grant of the patent: **22.07.1998**
(21) Application number: 93107459.5
(22) Date of filing: 07.05.1993
(51) Int. Cl.: F02D 13/02

(54) **Exhaust timing controller for two-stroke cycle engine**
Auslasszeitsteuerung für eine Zweitaktbrennkraftmaschine
Commande de l'échappement pour moteur à deux temps

(30) Priority: 28.12.1992 JP 349118/92
(43) Date of publication of application: 06.07.1994
(73) Proprietor: SUZUKI KABUSHIKI KAISHA, Hamamatsu-Shi, Shizuoka-Ken (JP)
(72) Inventor: Yamauchi, Kosaku, Hamana-Gun, Shizuoka-Ken (JP)
(74) Representative: Klunker . Schmitt-Nilson . Hirsch

(56) References cited:
- EP-A- 0 404 341
- WO-A-90/14512
- DE-A- 3 937 679
- US-A- 4 920 931
- PATENT ABSTRACTS OF JAPAN vol. 15, no. 505 (M-1194)20 December 1991 & JP-A-03 222 816 (YAMAHA MOTOR CO LTD) 1 October 1991
- PATENT ABSTRACTS OF JAPAN vol. 12, no. 471 (M-773)9 December 1988 & JP-A-63 192 913 (HONDA MOTOR CO LTD) 10 August 1988
- PATENT ABSTRACTS OF JAPAN vol. 15, no. 194 (M-1114)20 May 1991 & JP-A-03 050 322 (HONDA MOTOR CO LTD) 4 March 1991

## Description

The present invention relates to an exhaust timing controller for a two-stroke cycle engine.

Generally in a two-strocke cycle engine, it is known well that a high power is obainable covering the whole rotational frequency range by delaying an exhaust timing at the time of low-speed rotation and quickening the exhaust timing according as a rotational frequency increases.

A conventional exhaust timing controller for adjusting an exhaust timing has a construction wherein an exhaust timing control valve is provided in the vicinity of an opening portion of an exhaust port opening to the inside wall surface of a cylinder bore, the exhaust timing control valve being driven by an actuator such as servomotor or the like, thereby changing a height or an opening upper edge portion, i.e. edge portion on the top dead center side, of the exhaust port.

In the case of such exhaust timing controller, the tendency is such that when an opening upper edge portion of the exhaust port rats high or shifts to the top dead center side, the exhaust timing is quickened and an engine characteristic assumes a high-speed rotation, whereas when the opening upper edge portion of the exhaust port gets low on the contrary or shirts to the bottom dead center side, the exhaust timing is delayed and the engine characteristic assumes a low-speed rotation.

A driving mode of the exhaust timing control valve in a conventional exhaust timing controller generally comprises driving the exhaust timing control valve directly by a power of the actuator (or directly valve directly by a power of the actuator (or directly through a rod or other means), or driving the exhaust timing control valve by reducing a power of the actuator by means of a reduction gear.

However, driving the exhaust timing control valve directly necessitates a driving force sufficiently enough to activate the exhaust timing control valve even at the time when a high exhaust pressure is applied to the exhaust timing control valve, e.g. when the two-strocke cycle engine runs slow on a high load. Therefore a problem to arise unavoidably is such that the actuator must be constructed to a large size.

On the other hand, in the case of a mode to drive the exhaust timing control valve by reducing the power of the actuator by means of a reduction gear, the actuator can be miniaturized substantially. However, a lost motion is easy to arise on the exhaust timing control valve due to a backlash of the reduction gear, a position of the exhaust timing control valve at elevating stroke opposite end portions, i.e. activating portions, is capable particularly of being inaccurate, and an excessively high cost will be required for machining the reduction gear and other parts additionally thereto.

Moreover, in the conventional exhaust timing controller, since the exhaust timing control valve protrudes largely into the exhaust port at the time when the two-stroke cycle engine runs slow, a drop in level is caused on a downstream side of the exhaust timing control valve to cause a big disturbance of a flowing exhaust gas, and thus, there is such a fear as that the exhaust gas becomes hard to flow and an output drops consequently.

WO 90/14512 discloses an exhaust timing controller for delaying the opening of the exhaust port in a two-stroke cycle engine during the expansion stroke. The actuator operates in timed relation with the rotation of the crankshaft. The valve is disposed within the exhaust port remote from the inside wall surface of the cylinder bore. Further in accordance with this document, it is suggested that it may be desirable to adjust the degree of valve movement with engine speed and throttle opening, with the valve remaining substantially closed at low speeds and closed throttle and providing full movement at high speeds and wide open throttle. The mechanism of this prior art apparatus is such that a valve piston is moved into the passage of an exhaust channel. That piston is slidably mounted in a cylinder attached obliquely with respect to the cylinder block. The mechanism shown in this document moves the piston of the valve in direct relationship with the rotation of the crank. The mechanism for controlling the extent of valve movement in accordance with the engine speed is not shown in the document. What is disclosed is the mechanism for coupling the crank with the valve piston so that movement of the valve piston follows the movement of the crank.

DE-A-39 37 679 discloses a valve structure operated in dependency of a load and the engine speed. The valve comprises a sliding member having a rack attached thereto and meshing with a pinion.

JP-A-03 222 816 discloses an actuator for actuating a movable valve by using a servo motor and a rope connected to the movable valve.

An object of the present invention is to provide an exhaust timing controller for a two-stroke cycle engine which operates in dependency of the engine speed and is functional to allow even a small-sized actuator to actuate the exhaust timing control valve smoothly.

This is achieved by the features of claim 1.

The timing controller is capable of preventing a disturbance of an exhaust gas flow from arising on a downstream side of an exhaust timing control valve protruding into an exhaust port at the time when the two-strocke cycle engine runs slow.

Preferred embodiments of the invention are defined in the dependent claims.

In preferred embodiments, a valve holder is disposed between the housing member and the cylinder block and the exhaust timing control valve is held by the valve holder. The exhaust timing control valve comprises a sliding member having a thickness smaller than that of the valve holder to be slidable between the cylinder block and the housing member and also comprises a valve body movable in accordance with the sliding motion of the sliding member.

The power transferring means further includes a slider mechanism disposed between the eccentric cam member and the exhuast timing control valve and adapted to transfer an eccentric motion of the eccentric cam member to the exhaust timing control valve through a face contact. The sliding member is provided with a recessed portion in which a slider is horizontally slidably accommodated, the slider being provided with substantially a circular hole corresponding to an outer profile of the eccentric cam member and the eccentric cam member being fitted tightly into the circular hole of the slider to be rotatable. The sliding member has substantially rectangular shape having one side edge along which a groove is formed, the groove being opened to the side of the cam shaft and a pivot axis of a straghtening member is fitted into the groove to be pivotal. The opened sides of the recessed portion and the grooves of the sliding member are closed by a back shim having a through hole through which the cam shaft extends. The straightening member has a free end contacting a wall portion of the exhaust port slidably and pivotally through another slider mechanism.

The power transferring means further includes a pulley mounted on the one end of the cam shaft and a cable means wound around the pully at one end and connected to the actuator at the other end.

In the exhaust timing controller for a two-stroke cycle engine which is constructed as described above, the eccentric cam is driven to rotate on a power of the actuator, the exhaust timing control valve moves vertically according to an eccentric motion of the eccentric cam, and a height of the opening edge portion on a top dead center side of the exhause port changes to adjust an exhaust timing of the two-stroke cycle engine.

As described above, in case the exhaust timing control valve is moved vertically on the eccentric cam, since a backlash usually arising when a reduction gear is used may be removed, the exhaust timing control valve operates smoothly without a lost motion, and the exhaust timing control valve may be activated by a small force, whereby the actuator can be miniaturized reasonably. Furthermore, a position of the exhaust timing control valve at elevating stroke opposite end portions is determined more accurately, and the exhaust timing controller can be constructed at a moderate cost.

Furthermore, the slider mechanism for transferring an eccentric motion of the eccentric cam to the exhaust timing control valve according to a face contact is provided between the eccentric cam and the exhaust timing control valve, whereby the cam member of the eccentric cam and the slider of the slider mechanism and the exhaust timing control valve come all in face contact with each other, and hence, the durability of the cam member and the sliding portion around the slider may be enhanced and the fouling or other detects can be prevented as well.

Still furthermore, according to the location of the straightening member of the present invention, the exhaust gas within the exhasut port comes to flow smoothly at the time of a low-speed rotation of the two-stroke cycle engine, and the exhaust efficiency is enhanced to a high output.

### BRIEF DESCRIPTION OF THE DRAWINGS

For a better understanding of the present invention and to show how the same is carried out, reference is made, by way of preferred embodiment, to the accompanying drawings, in which:
Fig. 1 is a longitudinal sectional view of a two-stroke cycle engine to which the present invention is applied;
Fig. 2 represents one embodiment of the present invention, in which Fig. 2A is a view showing a high-speed state of an exhaust timing controller and Fig. 2B is a view showing a low-speed state of the exhaust timing controller;
Fig. 3 is a sectional view taken along the line III-III of Fig. 1;
Fig. 4 is a view taken in a direction indicated by an arrow IV of Fig. 2A;
Fig. 5 is a view taken along the line V-V of Fig. 2A;
Fig. 6 is a sectional view taken along the line VI-VI of Fig. 2A;
Fig. 7 is an exploded perspective view showing a valve body and associated members of the present invention; and
Fig. 8 is a perspective view of an assembly of the members of Fig. 7.

### DESCRIPTION OF THE PREFERRED EMBODIMENT

One embodiment of the present invention will now be described with reference to the accompanying drawings.

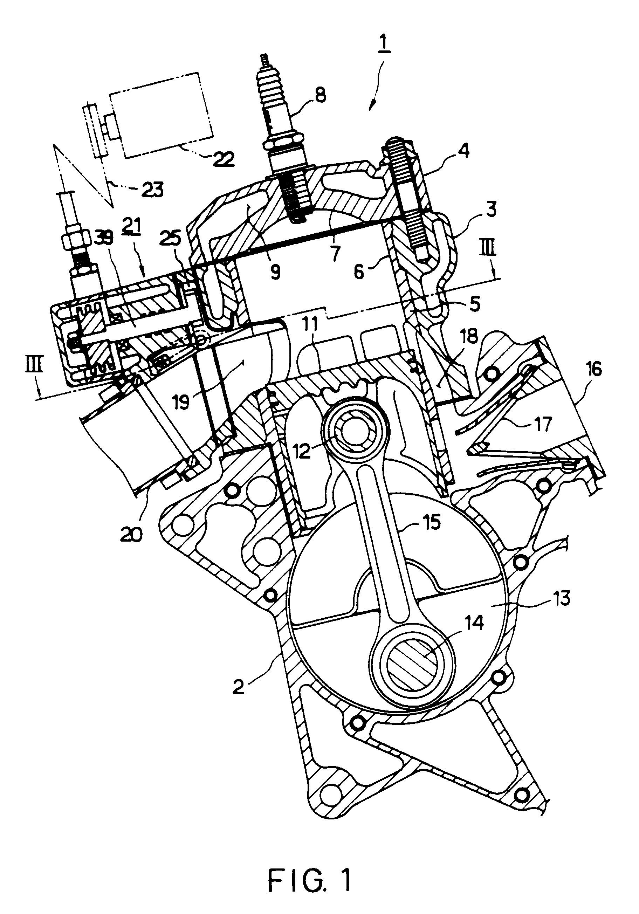

Fig. 1 is a longitudinal secitonal view of a two-stroke cycle engine to which the present invention is applied. The two-stroke cycle engine 1 is a water-cooled single cylinder type mounted, for example, on a motorcycle, and is constructed to have a cylinder block 3 and a cylinder head 4 incorporated in order on a top of a crank case 2.

A cylinder liner 5 is provided within the cylinder block 3, and a cylinder bore 6 is formed in the cylinder liner 5. Further, a combustion chamber 7 matching with the cylinder bore 6 is formed on the cylinder head 4, and an ignition plug 8 is screwed therein at the central portion. A water jacket 9 through which a cooling water circulates is formed around the cylinder bore 6 and the combustion chamber 7.

A piston 11 is inserted slidably into the cylinder bore 6, and a piston pin 12 provided on the piston 11 and a crank pin 14 of a crankshaft 13 journaled rotatably within the crank case 2 are coupled together by a connection rod 15.

A suction port 16 is provided on the crank case 2 and a lead valve 17 is provided therein. A carburetor, not indicated in the illustration, is coupled to the suction port 16.

A plurality of scavenging ports 18 ascend from the inside of the crank case 2 along the cylinder liner 5 and these scavenging ports 18 open respectively to an inside wall surface of the cylinder bore 6.

An exhaust port 19 opens to the inside wall surface of the cylinder bore 6 at a postion somewhat higher than the scavenging ports 18. The exhaust port 19 passes through the cylinder block 3 to communicate with the exterior, and a exhaust muffler 20 is connected to its outlet.

An exhaust timing controller 21 is provided on the exhaust port 19. The exhaust timing controller 21 includes an actuator 22 such as servomotor or the like, and a cable mechanism 23 for transferring a power of the actuator 22.

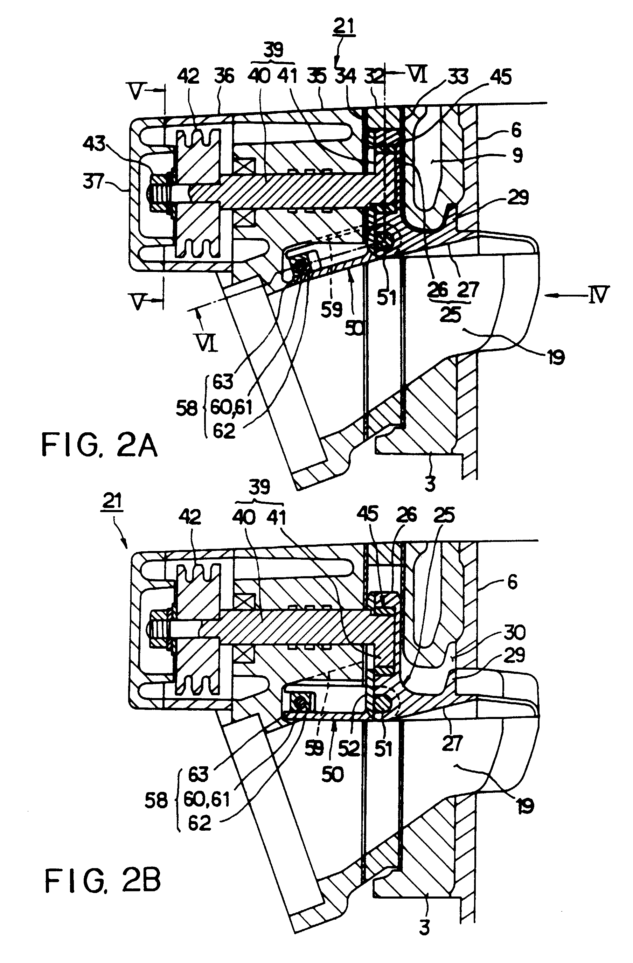

Figs. 2A and 2B are enlarged views of the exhaust timing controller 21, representing one embodiment of the present invention.

An exhaust timing control valve 25 for changing a height of an opening edge portion on the top dead center side of the exhaust port 19 is incorporated in the exhaust timing controller 21. The exhaust timing control valve 25 is provided with a slider 26 constructed in the form of a flat plate and a valve body 27 formed integrally or so with the slider 26.

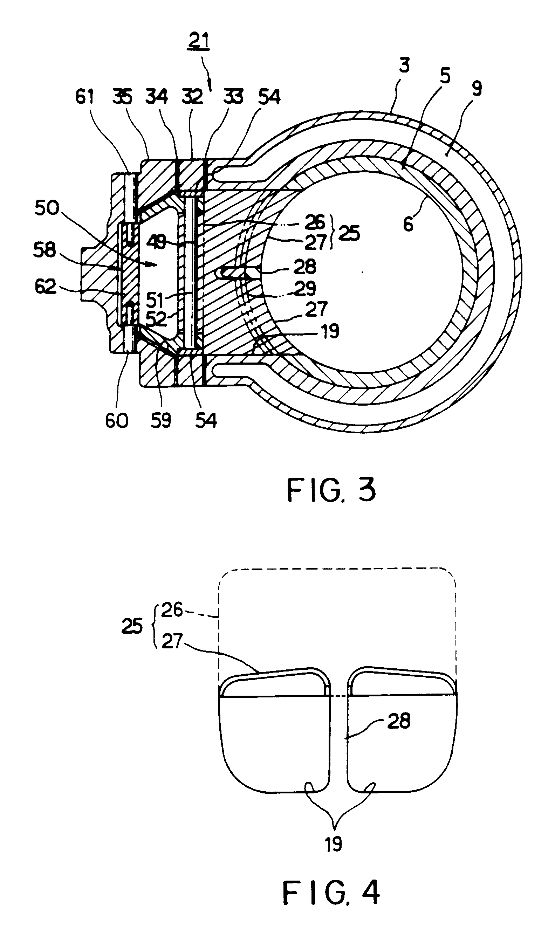

The slider 26 is parallel axially of the cylinder bore 6, side-viewed as Fig. 1 and Fig. 2, and is orthogonal to the exhaust prot 19, plane-viewed as Fig. 3, thus being liftable axially of the cylinder bore 6.

On the other hand, the valve body 27 extends from a lower edge portion of the slider 26 toward an opening portion of the exhaust port 19 and its nose portion is R-like in shape to cope with a curvature of the cylinder bore 6. As shown in Fig. 3 and Fig. 4, the exhaust port 19 is bilatrally divided into two portions by a center bridge 28, and therefore, the valve body 27 is provided in a pair bilaterally accordingly, its sectional form is made to cope with the top shape of a passage of each exhaust port 19, so that, as shown in Fig. 2A and Fig. 4, the valve body 27 comes close tightly to a top of the passage of the exhaust port 19 when the slider 26 comes uppermost in position.

A flange 29 parallel with a curved surface of the cylinder bore 6 is formed integrally on an upper surface of the valve body 27, and the flange 29 comes in and out of a recess 30 provided in the cylinder block 3 as shown in Fig. 2B. The height of the flange 29 is kept even or over with an elevating stroke of the slider 26, and as shown in Fig. 2B, it is constructed that the flange 29 does not get out of the recess 30 when the slider 26 comes lowermost in position.

A valve holder 32 slightly thicker than the slider 26 is fixed to the cylinder block 3 through a gasket 33 and a valve housing 35 is fixed to the valve holder 32 through a gasket 34. The exhaust port 19 passes through the valve holder 32, the valve housing 35 and the gaskets 33, 34. Then, a pulley cover 36 and a cap 37 are fixed to the valve housing 35 in that order.

For the thickness being slightly thinner than that of the valve holder 32, the slider 26 of the exhaust timing control valve 25 is slidable between the cylinder block 3 and the valve housing 35, and the valve body 27 shifts axially of the cylinder according as the slider 26 slides. Thus, the height of the edge portion on the top dead center side of the opening portion of the exhaust port 19 changes to adjust an exhaust timing of the two-stroke cycle engine 1. In this connection, Fig. 2A indicates a high-speed rotation state in which the exhaust timing is most quickened and Fig. 2B indicates a low-speed rotation state in which the exhaust timing is delayed most.

The exhaust timing control valve 25 moving thus vertically is driven by the power of the actuator 22, and the exhaust timing control valve 25 ascends according as a rotational frequency of the two-stroke cycle engine 1 rises, thus accelerating the exhaust timing. Here, the power of the actuator 22 is transformed into an elevating stroke of the exhaust timing control valve 25 by an eccentric cam 39.

A cam shaft 40 of the eccentric cam 39 is journaled rotatably within the valve housing 35. A circular cam portion 41 is formed on one end of the cam shaft 40 eccentrically with reference to the shaft center of the live spindle 40, and a pulley 42 is fixed rotatably to the other end by means of nut 43.

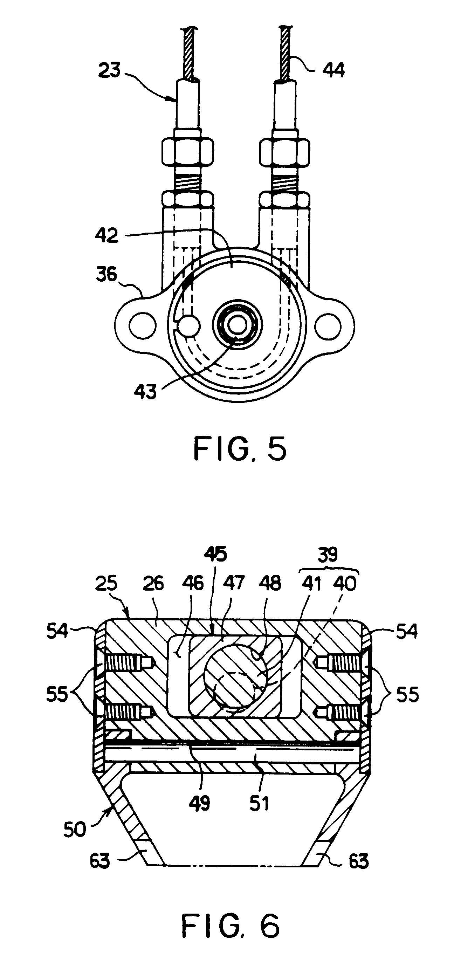

A cable 44 of the cable mechanism 23 is wound around the pulley 42 as indicated in Fig. 5, the power of the actuator 22 is transferred to the pulley 42 through the cable 44 to rotate the eccentric cam 39.

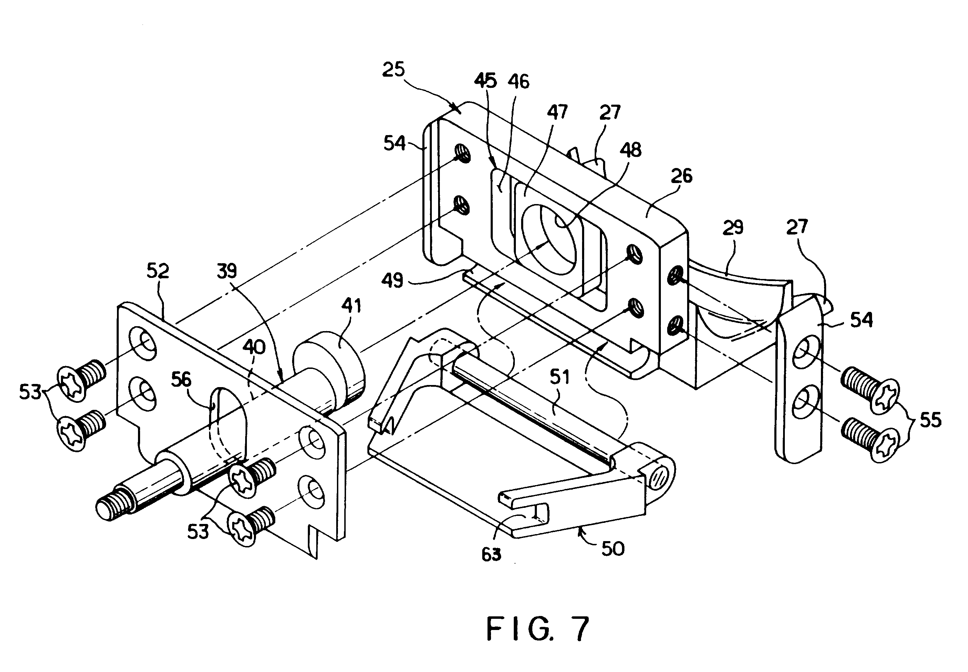

As indicated in Fig. 6 and Fig. 7, a slider mechanism 45 is provided between the eccentric cam 39 and the exhaust timing control valve 25. The slider mechanism 45 functions to transfer an eccentric motion of the cam portion 41 of the eccentric cam 39 to the exhaust timing control valve 25 through a face contact.

A slider chamber 46 is provided in the slider 26, of substantially rectangular shape, of the exhaust timing control valve 25, and a slider 47 is fitted in the slider chamber 46, as a recessed portion, slidably horizontally in such manner as will be free form a lost motion vertically. A circular cam hole 48 is perforated in the slider 47, and the cam portion 41 of the eccentric cam 39 is inserted in the cam hole 48 rotatably so that the outer profile of the cam portion 41 coinsides with the cam hole 48 so as to be free form a lost motion.

Thus, when the cam shaft 40 is driven to rotate by the power of the actuator 22, the cam portion 41 rotates in the cam hole 48 of the slider 47, and the exhaust timing control valve 25 ascends at a stroke two times as high as an eccentricity of the cam portion 41.

Meanwhile, a groove 49 extending horizontally is formed on a lower end portion of the slider 26 on the side same as the slider chamber 46, and a pivotal shaft 51 of a straightening or commutating member 50 which will be described hereinlater is fitted rotatably in the groove 49. Further, a back shim 52 is locked to a face of the slider 26 on the side where the cam chamber 46 and the groove 49 are formed by, for example, four pieces of screws 53, and side shims 54 are locked each to opposite sides of the slider 26 by, for example, two pieces of screws 55.

A circular hole 56 elongated longitudinally is bored in the back shim 52, and the cam shaft 40 is inserted into the elongated circular hole 56. Thus, the eccentric cam 39 and the slider 47 will be incorporated in the slider chamber 46 by the back shim 52. Further, the pivotal shaft 51 is retained within the groove 49 by the back shim 52, and its axial sliding is controlled by the left and right side shims 54 at the same time.

The aforementioned straightening or commutating member 50 is provided on a portion whereat the exhaust timing control valve 25 comes in and out of the exhaust port 19, namely a lower edge portion of the slider 26. The straightening member 50 is formed to have a shape extending smoothly from the lower edge portion of the slider 26 toward a downstream side of the exhaust port 19. An upstream side end portion of the straightening member 50 is pivoted on the slider 26 by the pivotal shaft 51, and a downstream side end portion of the straightening member 50 is engaged slidably and also rotatably with an inside wall portion of the exhaust port 19 through a slider mechanism 58.

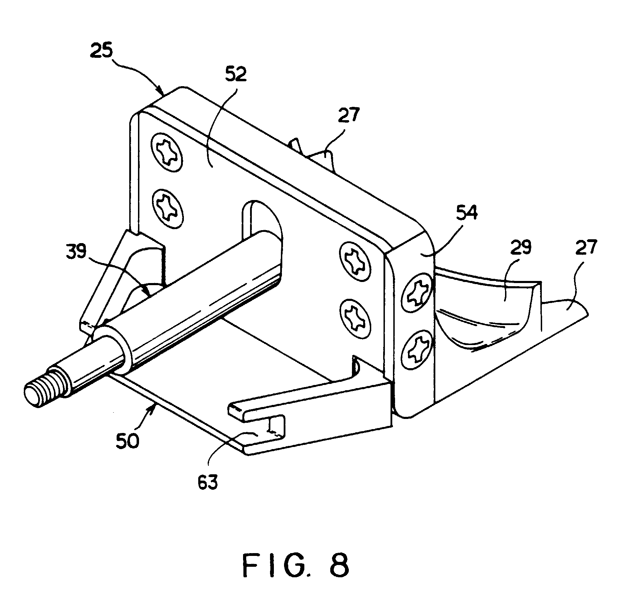

As shown in Figs. 2A and 2B and Fig. 3, a straightening member containing recess 59 is formed on an upper surface of the inside wall portion of the exhaust port 19. The slider mechanism 58 comprises pivots 60 and 61 provided protrusively left and right at the downstream side end portion of the straightening member containing recess 59, a slider 62 angular in section which is journaled ratatably in the pivots 60 and 61, and a pair of gripper portions 63 provided horizontally on the downstream side end portion of the straightening member 50 as shown in Fig. 7 and Fig. 8. The gripper portions 63 comprises gripping opposite end portions of the slider 62 slidably but free from a lost motion.

At the time when the exhaust timing control valve 25 is positioned uppermost as shown in Fig. 2A, the straightening member 50 is contained throughly in the straightening member containing recess 59, and an upper surface of the passage of the exhaust port 19 is made to have a lower surface of the valve body 27 and a lower surface of the straightening memeber 50 connected smoothly thereon. In this case, a sectinal area of the passage of the exhaust port 19 is maximized, and thus much exhaust gas is allowed to flow.

Further, when the exhaust timing control valve 25 comes lowermost in position as shown in Fig. 2A, an upstream side end portion of the straightening member 50 is drawn out of the straightening member containing recess 59. In this case, a downstream side end portion of the straightening member 50 turns round the pivots 60 and 61 together with the slider 62, and a distance between the pivotal shaft 51 and the pivots 60 and 61 becomes shorter than that in the state indicated in Fig. 2A at the same time. Accordingly, the gripper portions 63 of the straightening member 50 and the slider 62 slide relatively to absorb a difference of the distance mentioned above.

In such state, the straightening member 50 extends smoothly to a downstream side of the exhaust timing control valve 25 projecting largely into the exhaust port 19, therefore a drop in level will never be formed on the downstream side of the exhaust timing control valve 25 as ever before, and hence an exhaust gas flow will not be disturbed. Consequently, the exhaust gas flow is bettered and an output at the time of a low-speed rotation of the two-stroke cylce engine 1 may be enhanced.

In this connection, when the exhaust timing control valve 25 has descended as shown in Fig. 2B, the flange 29 provided on an upper surface of the valve body 27 functions as a stopper of the exhaust gas, thus preventing the exhaust gas from flowing into the sliding portion or around of the exhaust timing control valve 25.

In the exhaust timing controller 21 constructed as above, the power of the actuator 22 is transformed into an elevating stroke of the exhaust timing control valve 25 by the eccentric cam 39, and therefore, by setting the exhaust timing control valve 25 to ascend or descend for the total strokes by rotating the eccentric cam 39 by 180° like the present embodiment, the moving rate of the exhaust timing control valve 25 is minimized in the vicinity of vertical end portions of the elevating stroke of the exhaust timing control valve 25 as compared with magnitude of the turning angles of the eccentric cam 39.

Accordingly, the exhaust timing control valve 25 is driven decreasingly in velocity in the vicinity of vertical end portions of its elevating stroke, and hence a satisfactory starting power is obtainable even by miniaturizing the actuator 22. Thus, even in case a high exhaust pressure is applied to the exhaust timing control valve 25 at the time, for example, when the two-stroke cycle engine 1 runs slow particularly on a high load, the exhaust timing control valve 25 can be activated smoothly on a small driving force.

Accordingly, a driving force of the actuator 22 need not be increased by means of a reduction gear as ever before, and hence, the exhaust timing controller 21 can be constructed at an exceedingly low cost. In addition, since the gear teeth are free from backlash with each other unlike the case where a reduction gear is used, the exhaust timing control valve 25 operates in order without a lost motion, and the exhaust timing control valve 25 can be positioned accurately particularly at opposite end portions of the elevating stroke (a dispersion at the time of engine assembly being minimized).

Further, since the slider mechanism 45 is interposed between the eccentric cam 39 and the exhaust timing control valve 25, the cam portion 41 of the eccentric cam 39, the slider 47 and the exhaust timing control valve 25 come all in face contact with each other. Accordingly, a contact pressure to work among these members 41, 47 and 25 can be minimized and a fouling or other defects can thus be prevented effectively.

Therefore, the moving motion of the exhaust timing control valve 25 can be kept smooth and a material of the exhaust timing control valve 25, the slider 26 and the valve body 27 may be replaced by another material such as light alloy or the like, thus contributing to a lightweight construction to realize the two-stroke cycle engine 1.

Additionally, since an oil-containing material is applicable to the material of the slide 47, the moving motion of the exhaust timing control valve 25 getting high in temperature can be made smooth further and the durability of the sliding portion can sharply be enhanced at the same time.

On the other hand, an installation of the straightening member 50 on the exhaust timing control valve 25 is available to make smooth the flow of exhaust gas within the exhaust port 19 at the time of a low-speed rotation of the two-stroke cycle engine 1, thereby enhancing an exhaust efficiency to a high output.

Further, the straightening member 50 and the slider 62 and the pivots 60 and 61 come all in face contact with each other, and thus, the wear resistance may sharply be enhanced, whereby a material such as light alloy or the like may be used on the straightening member 50, thereby contributing to a lightweight construction to realize. In this connection, the durability can further be enhanced from applying an oil-containing material to the slider 62.

According to the present invention of the structures described hereinabove, various advantageous effects, which were described hereinbefore, can be achieved over the prior art.

## Claims

1. An exhaust timing controller (21) for a two-stroke cycle engine (1) in which an exhaust timing control valve (25) for changing a height of an opening edge portion on a top dead center side of an exhaust port (19) opening to an inside wall surface of a cylinder bore (6) formed to a cylinder (5) of the engine is moved axially of the cylinder bore (6) by a power of an actuator (22), wherein an exhaust timing is accelerated in response to an engine rotational frequency rise and the exhaust timing control valve (25) comprising a sliding member (26) disposed between a housing member (35) located above the exhaust port (19) and a cylinder block (3) of the engine (1) and adapted to change the height of an opening edge portion on the top dead center side of the exhaust port, wherein the power of the actuator (22) is transferred to the exhaust timing control valve (25) by a power transferring means, wherein said power transferring means comprises a cam shaft (40) disposed in the housing member (35), and operatively connected at one end thereof to the actuator (22) and also comprises an eccentric cam (41) mounted on another one end of the cam shaft (40) so as to engage with the exhaust timing control valve (25), and the power of the actuator is transformed into an elevating stroke of the exhaust timing control valve (25) according to an eccentric motion of the eccentric cam (41), and the exhaust timing control valve (25) is held by a valve holder (32) disposed between the housing member (35) and the cylinder block (3), characterised in that the valve holder (32) is secured to the cylinder block (3) and the housing member (35) to the valve holder (32) from the side thereof, and the valve holder accomodates said eccentric cam (41), said cam shaft (40) is directed toward the opposite side of the valve holder (32) and connected to the actuator (22) and the sliding member (26) of the exhaust timing control valve (25) has a thickness smaller than that of the valve holder (32) to be slidable between the cylinder block (3) and the housing member (35) and a valve body (27) of the control valve (25) being movable in accordance with the sliding motion of the sliding member (26), whereby the exhaust timing control valve is moved axially of the cylinder bore.

2. An exhaust timing controller according to claim 1, wherein a slider mechanism (45, 26) for transferring an eccentric motion of the eccentric cam (41) to the exhaust timing control valve (25) through a face contact is provided between the eccentric cam (41) and the exhaust timing control valve (25).

3. An exhaust timing controller according to claim 1 or 2, wherein a straightening member (50) formed to have a shape extending smoothly from a portion whereat the exhaust timing control valve (25) retracts into the exhaust port (19) to a downstream side of the exhaust port is provided on said portion and while an upstream side end portion of the straightening member (50) is pivoted rotatably on the exhaust timing control valve (25), a downstream side end portion of the straightening member (50) is engaged slidably and rotatably with an inside wall portion of the exhaust port (19).

4. An exhaust timing controller according to claim 3, wherein a slider mechanism (58) is provided between the downstream side end portion of the straightening member (50) and the inside wall portion of the exhaust port (19).

5. An exhaust timing controller according to any of claims 1 to 4, wherein said sliding member (26) is provided with a recessed portion (46) in which a slider (47) is horizontally slidably accommodated, said slider (47) being provided with substantially a circular hole (48) corresponding to an outer profile of the eccentric cam (41) and said eccentric cam (41) being fitted tightly into said circular hole (48) of the slider (47) to be rotatable.

6. An exhaust timing controller according to claim 5, wherein said sliding member (26) has substantially rectangular shape having one side edge along which a groove (49) is formed, said groove (49) being opened to the side of the cam shaft (40) and wherein a pivot axis of a straightening member (50) is fitted into the groove (49) to be pivotal.

7. An exhaust timing controller according to claim 6, wherein opened sides of the recessed portion (46) and the groove of the sliding member (26) are closed by a back shim (52) having a through hole (56) through which the cam shaft (40) extends.

8. An exhaust timing controller according to claim 6 or 7, wherein said straightening member (50) has a free end contacting a wall portion of the exhaust port (19) slidably and pivotally through another slider mechanism (58).

9. An exhaust timing controller according to any of claims 1 to 8, wherein said power transferring means further includes a pulley (42) mounted on the one end of the cam shaft (40) and a cable (44) wound around the pulley (42) at one end and connected to the actuator (22) at an other end.

## Patentansprüche

1. Auslaßzeitsteuerung (21) für einen Zweitaktmotor (1), in dem ein Auslaßzeitpunkt-Steuerventil (25) zum Ändern einer Höhe eines Öffnungsrandabschnitts auf der Seite des oberen Totpunkts einer Auslaßöffnung (19), die in einer Innenwandfläche einer Zylinderbohrung (6) eines Motorzylinders (5) mündet, axial bezüglich der Zylinderbohrung (6) mit Hilfe der Kraft eines Aktuators (22) bewegt wird, wobei ein Auslaßzeitpunkt ansprechend auf eine Motordrehzahlerhöhung zeitlich vorgerückt wird und das Auslaßzeitpunkt-Steuerventil (25) ein Verschiebeglied (26) aufweist, welches sich zwischen einem Gehäuseteil (35) oberhalb der Auslaßöffnung (19) und einem Zylinderblock (3) des Motors (1) befindet und dazu ausgebildet ist, die Höhe des Öffnungsrandabschnitts auf der Seite des oberen Totpunkts der Auslaßöffnung zu ändern, wobei die Kraft des Aktuators (22) auf das Auslaßzeitpunkt-Steuerventil (25) mit Hilfe einer Kraftübertragungseinrichtung übertragen wird, welche eine in dem Gehäuseteil (35) untergebrachte Nockenwelle (40) aufweist, die mit ihrem einen Ende betrieblich mit dem Aktuator (22) gekoppelt ist und außerdem einen Exzenternocken (41) aufweist, der an einem anderen Ende der Nockenwelle (40) angeordnet ist. um mit dem Auslaßzeitpunkt-Steuerventil (25) zusammenzuarbeiten, wobei die Kraft des Aktuators umgesetzt wird in einen Aufwärtshub des Auslaßzeitpunkt-Steuerventils (25) entsprechend einer exzentrischen Bewegung des Exzenternockens (41), und wobei das Auslaßzeitpunkt-Steuerventil (25) von einem Ventilhalter (32) gehalten wird, der sich zwischen dem Gehäuseteil (35) und dem Zylinderblock (3) befindet, **dadurch gekennzeichnet**, daß der Ventilhalter (32) an dem Zylinderblock (3) und das Gehäuseteil (35) an dem Ventilhalter (32) von dessen Seite her angebracht ist, und der Ventilhalter den Exzenternocken (41) aufnimmt, wobei die Nockenwelle (40) von dem Ventilhalter (32) abgewandt und mit dem Aktuator (22) verbunden ist, und das Verschiebeglied (26) des Auslaßzeitpunkt-Steuerventils (25) eine geringere Dicke als der Ventilhalter (32) aufweist, damit es zwischen dem Zylinderblock (3) und dem Gehäuseteil (35) verschieblich ist, und ein Ventilkörper (27) des Steuerventils (25) nach Maßgabe der Verschiebebewegung des Verschiebeglieds (26) beweglich ist, wodurch das Auslaßzeitpunkt-Steuerventil axial bezüglich der Zylinderbohrung bewegt wird.

2. Auslaßzeitsteuerung nach Anspruch 1, bei der ein Verschiebemechanismus (45, 26) zum Übertragen einer exzentrischen Bewegung des Exzenternockens (41) auf das Auslaßzeitpunkt-Steuerventil (25) über Flächenberührung zwischen dem Exzenternocken (41) und dem Auslaßzeitpunkt-Steuerventil (25) vorgesehen ist.

3. Auslaßzeitsteuerung nach Anspruch 1 oder 2, bei der ein Richtglied (50) mit einer Form, die sich glatt von einem Bereich, in dem das Auslaßzeitpunkt-Steuerventil (25) sich in die Auslaßöffnung (19) zurückzieht, zu einer stromabwärtigen Seite der Auslaßöffnung erstreckt, in diesem Bereich vorgesehen ist, wobei ein stromabwärtiger Endbereich des Richtglieds (50) schwenkbar mit dem Auslaßzeitpunkt-Steuerventil (25) gekoppelt ist, und ein stromabwärtiger Endabschnitt des Richtglieds (50) verschieblich und drehbar mit einem Innenwandabschnitt der Auslaßöffnung (19) in Eingriff steht.

4. Auslaßzeitsteuerung nach Anspruch 3, bei dem ein Verschiebemechanismus (58) zwischen dem stromabwärtigen Endabschnitt des Richtglieds (50) und dem Innenwandabschnitt der Auslaßöffnung vorgesehen ist.

5. Auslaßzeitsteuerung nach einem der Ansprüche 1 bis 4, bei der das Verschiebeglied (26) mit einer Ausnehmung (46) ausgestattet ist, in der ein Gleitstück (47) horizontal verschieblich aufgenommen ist, wobei das Gleitstück (47) mit einem im wesentlichen kreisförmigen Loch (48) entsprechend einem Außenprofil des Exzenternockens (41) ausgestattet ist, wobei der Exzenternocken (41) drehbar und eng in das kreisförmige Loch (48) des Gleitstücks (47) eingepaßt ist.

6. Auslaßzeitsteuerung nach Anspruch 5, bei der das Verschiebeglied (26) etwa rechteckige Form aufweist, bei der an einem Rand entlang eine Nut (49) ausgebildet ist, wobei die Nut (49) zu der Seite der Nockenwelle (40) hin offen ist und eine Schwenkachse eines Richteglieds (50) schwenkbar in die Nut (49) eingesetzt ist.

7. Auslaßzeitsteuerung nach Anspruch 6, bei der geöffnete Seiten der Ausnehmung (46) und die Nut des Verschiebeglieds (26) durch eine Abschlußscheibe (52) verschlossen sind, die ein Durchgangsloch (56) aufweist, durch die hindurch sich die Nockenwelle (40) erstreckt.

8. Auslaßzeitsteuerung nach Anspruch 6 oder 7, bei der das Richtglied (50) ein freies Ende aufweist, welches einen Wandabschnitt der Auslaßöffnung (19) verschieblich und drehbar über einen weiteren Verschiebemechanismus (58) kontaktiert.

9. Auslaßzeitsteuerung nach einem der Ansprüche 1 bis 8, bei der die Kraftübertragungseinrichtung außerdem eine an einem Ende der Nockenwelle (40) gelagerte Seilscheibe (42) sowie ein Seil (44) enthält, welches mit einem Ende um die Seilscheibe (42) geschlungen und mit dem anderen Ende mit dem Aktuator (22) verbunden ist.

## Revendications

1. Contrôleur de calage d'échappement (21) pour un moteur à deux temps (1) dans lequel une soupape de commande de calage d'échappement (25) servant à changer une hauteur d'une partie de bord d'ouverture d'un côté du point mort haut d'une lumière d'échappement (19) s'ouvrant dans une surface de paroi intérieure d'un alésage de cylindre (6) formé dans un cylindre (5) du moteur est transférée suivant l'axe de l'alésage de cylindre (6) sous l'action d'un dispositif d'actionnement (22), dans lequel un calage d'échappement est accéléré en réponse à une élévation de la fréquence de rotation du moteur et la soupape de commande de calage d'échappement (25) comportant un élément coulissant (26) disposé entre un élément de boîtier (35) placé au-dessus de la lumière d'échappement (19) et un bloc-cylindres (3) du moteur (1) et adapté pour changer la hauteur d'une partie de bord d'ouverture du côté du point mort haut de la lumière d'échappement, dans lequel l'action du dispositif d'actionnement (22) est transférée à la soupape de commande de calage d'échappement (25) par un moyen de transfert d'action, dans lequel ledit moyen de transfert de l'action comprend un arbre à cames (40) disposé dans l'élément de boîtier (35), et opérativement relié à une de ses extrémités au dispositif d'actionnement (22) et comprend également une came excentrique (41) montée sur une autre extrémité de l'arbre à cames (40) de façon à être en contact avec la soupape de commande de calage d'échappement (25), et l'action du dispositif d'actionnement est transformée en course d'élévation de la soupape de commande de calage d'échappement (25) selon un mouvement excentrique de la came excentrique (41), et la soupape de commande de calage d'échappement (25) est tenue par un support de soupape (32) disposé entre l'élément de boîtier (35) et le bloc-cylindres (3), caractérisé en ce que le support de soupape (32) est fixé au bloc-cylindres (3) et l'élément de boîtier (35) au support de soupape (32) du côté de celui-ci, et le support de soupape loge ladite came excentrique (41), ledit arbre à cames (40) est orienté vers le côté opposé du support de soupape (32) et relié au dispositif d'actionnement (22) et l'élément coulissant (26) de la soupape de commande de calage d'échappement (25) a une épaisseur plus petite que celle du support de soupape (32) pour pouvoir coulisser entre le bloc-cylindres (3) et l'élément de boîtier (35) et un corps de soupape (27) de la soupape de commande (25) pouvant se déplacer selon le mouvement de coulissement de l'élément coulissant (26), la soupape de commande de calage d'échappement étant ainsi déplacée suivant l'axe de l'alésage du cylindre.

2. Contrôleur de calage d'échappement selon la revendication 1, dans lequel un mécanisme de coulissement (45, 26) servant à transférer un mouvement excentrique de la came excentrique (41) à la soupape de commande de calage d'échappement (25) par un contact de face est interposé entre la came excentrique (41) et la soupape de commande de calage d'échappement (25).

3. Contrôleur de calage d'échappement selon la revendication 1 ou 2, dans lequel un élément de redressement (50) formé pour avoir une forme s'étendant doucement d'une partie où la soupape de commande de calage d'échappement (25) se rétracte dans la lumière d'échappement (19) vers un côté aval de la lumière d'échappement est sur ladite partie et tandis qu'une partie d'extrémité latérale amont de l'élément de redressement (50) est pivotée de façon tournante sur la soupape de commande de calage d'échappement (25), une partie d'extrémité latérale aval de l'élément de redressement (50) est en contact de façon coulissante et tournante avec une partie de paroi intérieure de la lumière d'échappement (19).

4. Contrôleur de calage d'échappement selon la revendication 3, dans lequel un mécanisme de coulissement (58) est entre la partie d'extrémité latérale aval de l'élément de redressement (50) et la partie de paroi intérieure de la lumière d'échappement (19).

5. Contrôleur de calage d'échappement selon l'une quelconque des revendications 1 à 4, dans lequel ledit élément coulissant (26) est pourvu d'une partie évidée (46) dans laquelle un coulisseau (47) est logé de façon horizontalement coulissante, ledit coulisseau (47) étant pourvu d'un trou sensiblement circulaire (48) correspondant à un profil extérieur de la came excentrique (41) et ladite came excentrique (41) étant ajustée serrée dans ledit trou circulaire (48) du coulisseau (47) pour être tournante.

6. Contrôleur de calage d'échappement selon la revendication 5, dans lequel ledit élément coulissant (26) a une forme essentiellement rectangulaire ayant un bord latéral le long duquel est formée une cannelure (49), ladite cannelure (49) étant ouverte du côté de l'arbre à cames (40) et dans lequel un axe de pivot d'un élément de redressement (50) est ajusté dans la cannelure (49) pour être pivotant.

7. Contrôleur de calage d'échappement selon la revendication 6, dans lequel des côtés ouverts de la partie évidée (46) et de la cannelure de l'élément coulissant (26) sont fermés par une cale arrière (52) ayant un trou traversant (56) à travers lequel s'étend l'arbre à cames (40).

8. Contrôleur de calage d'échappement selon la revendication 6 ou 7, dans lequel ledit élément de redressement (50) a une extrémité libre en contact avec une partie de paroi de la lumière d'échappement (19) de façon coulissante et tournante par un autre mécanisme de coulissement (58).

9. Contrôleur de calage d'échappement selon l'une quelconque des revendications 1 à 8, dans lequel le moyen de transfert d'action comprend de plus une poulie (42) montée sur une extrémité de l'arbre à cames (40) et un câble (44) enroulé autour de la poulie (42) à une extrémité et relié au dispositif d'actionnement (22) à une autre extrémité.
